# EUROPEAN PATENT APPLICATION

(11) **EP 3 835 496 A1**
(43) Date of publication of application: **16.06.2021**
(21) Application number: 19383108.8
(22) Date of filing: 12.12.2019
(51) Int. Cl.: E03C 1/04, E03C 1/05, F16K 37/00, G01K 1/14

(54) **SMART TAP FITTING**

(71) Applicant: Cañaveras Marin, Olga, 08800 Vilanova I La Geltru (ES)
(72) Inventor: LÓPEZ RODRÍGUEZ, Daniel, 08800 VILANOVA I LA GELTRÚ (ES)
(74) Representative: Iglesias Monravá, José Mª

(57) **Abstract**

The present invention relates to a smart tap fitting (1) with an actuating lever (10) for regulating a flow of water that is poured through a tap supply nozzle, in which the lever (10) or the tap fitting (1) has attached one position switch (20) such as a TILT switch, that is electrically feeded and provides a signal to a signal receiver, SR, wherein the position switch (20) provides information about an angle of the lever (α) with regard to a rest position of the lever in which the tap is in a closed state.

## Description

### Technical field

The invention concerns to the field of tapware and in particular to taps equipped with means allowing some kind of electronic report or control of the operation.

The invention refers to a smart tap fitting that is configured to provide status information by means of a signal receiver (SR) on the same tap or in a nearby region, or in a remote point in the last case through a Building Management System (BMS) or Supervisory Control And Data Acquisition (SCADA) system of a building.

The invention is of particular importance to be applied in hotels, hospitals, airports and residences in order to have supervision, control and monitoring of the whole tap fittings of the installation.

### State of the Art

US 4773767 discloses a thermometer for a water tap enabling the temperature of hot water or mixed hot and cold water to be read directly from the outlet of a tap or faucet or mixing tap or shower head.

US 5535779, discloses a water faucet, comprising: a casing for fastening to an outlet of a water supply pipe for controlling water output, a transparent zone in said casing, wherein water in said casing is visible through the transparent zone, a temperature display chip mounted within said transparent zone, and a transparent protective covering over the temperature display chip, wherein the temperature display chip is provided to detect and display the temperature of water in or passing through the casing.

Patent 7850323 discloses a sanitary fitting comprising a control cartridge that is arranged in a fitting housing and is connected to a water inlet and a water outlet, an actuating lever for actuating the control cartridge, and at least one light source, wherein arranged in the actuating lever is a light guiding element, the light guiding element has a light exit region at an exit from the actuating lever and a light entrance surface at the other end, and the light source arranged in the interior of the fitting housing is intended for feeding light into the light guiding element at the light entrance surface. The control cartridge is designed as a mixer cartridge and has associated a temperature sensor for the service water connected to a feed unit, and the latter drives the light source in such a way that the light source generates light of a different colour as a function of the measured temperature.

Although the tap fitting of the above patent application offers different possibilities of configuring the luminous element, it does not address to provide information about the angular position of the lever (i.e. to report about an off or on status).

Therefore the above technical solutions are not enough for proper faucet management, due the nowadays necessity to integrate the tapware facilities into the buildings controls systems (BMS) or another energy monitoring systems using for example SCADA systems, and furthermore there is a need of a low cost of communication devices for the tap fitting that can inform and operate with theses building systems to provide a better quality service of the installation, for example legionella control of the taps.

For this purpose and in order to solve this problem, the invention relates to a smart tap fitting that provides a complete communication system embedded into the tap fitting with all the necessary elements to provide this information and capability of operation upstream of automatized control systems and on the basis of a design of very affordable cost.

### Brief description of the invention

The invention proposes a tap fitting enabled to be coupled to any pre-existing tap, or to a new tap. The tap fitting of this invention comprises an actuating lever for regulating a flow of water that is poured through a tap supply nozzle that has attached at least one position switch that is electrically feeded and provides an information signal to a signal receiver, SR, about an angle of the lever α with regard to a rest position of the lever in which the tap is in a closed state.

More position switches can be included in the tap fitting to provide a better angular information about several relative positions of the lever.

The technology used for the position switch in one preferred embodiment (simplicity and costs) involves a TILT switch. Other embodiments of the position switch can be implemented using a hall device, a reed device or a gyroscope device in spite of having a cost increment.

The signal receiver SR can include a display included in the tap fitting or attached to a support (for example, a wall) close to the tap fitting. The display technology used can give information about status of the tap fitting (on or off position) and/or water temperature by means of an electronic circuit or an IC by the use of a temperature probe included in the tap body or in a cartridge attached to the tap body , so that a warning against scalding can be given.

This status information and/or water temperature is received by the signal receiver, SR, that in an embodiment is in a remote position with regard to a PCB included in the tap fitting , and the PCB has a communication module interacting with the SR or with a BMS system or with a SCADA system according to the stablished parametrization and configuration. This communication between the SR or with the BMS system or with the SCADA system is done through a cable or a wired Ethernet communication or a power over Ethernet communication or a wireless communication. The information provided to the SR, BMS or SCADA system is used to supervision and monitoring of the tap fittings of the whole installation.

Complementing the proposal of this invention there has been foreseen a actuator mechanism, actuated by at least one electro valve included in the tap or in the tap fitting that permits a closure or a controlled open action of the tap on dependence of the signal provided by the position switch to the Signal Receiver, SR, or from the BMS system or from the SCADA system.

The information provided by the display, implemented for example in a LCD display type or a matrix LED display type, is a numerical information of the water temperature, also providing in an alternative embodiment only or additionally visual information, like icons, of the actuator electro valve in the case that is activated by the signal receiver, SR, or the BSM or the SCADA system according to the parametrization of the tap fitting. For example, if there is a period of time when the faucet is not running, i.e. if there is a configured time that the water is not flowing through the nozzle, the system can automatically activate the electro valve of the tap fitting in order to flow the water and minimize the risk of legionella. Therefore, legionella bacteria prevention can be avoided by a simply specific cleaning process.

If the display, as the user interface, is a simple LED or a group of LEDs, the information provided in a simplified and minimalistic way giving information of the hot, cold and/or warm water temperature with a color combination or a dimming of the brightness or a flashing combination and other typical manners to provide information to the user, in addition to the situation of open or close status of the tap.

There are some possible embodiments for electrically feeding the position switch or the PCB and the related circuitry, this power supply could come from an external source like a replaceable battery or from an electrical grid or a photovoltaic or solar power cell or wind power or a fuel cell or a thermoelectric generator or a combination thereof.

Also, there is the possibility to electrically self-power supply by means of the flow of the water or at least in part by the movement of the lever.

For a fine working and fine tuning there is an adjustment system, for example a screw, that permits an angular regulation of the tap fitting with regard to the tap body so that the position switch providing a sure status signal to the SR, or to the BMS or to the SCADA system.

Other features of the invention appear from the following detailed description of an embodiment.

### Brief description of the Figures

The foregoing and other advantages and features will be more fully understood from the following detailed description of an embodiment with reference to the accompanying drawings, to be taken in an illustrative and non-limitative manner, in which:
Figs. 1a, 1b, 1c show inner structure of a position switch that can be use in this invention to provide physical status information of the angular lever position of the tap fitting.
Fig. 2 illustrates the position switch in an on and in an off situation according to the relative physical position of the lever of a tap fitting of the invention.
Fig. 3 shows in a cross section one possible embodiment of the tap fitting with the position switch included inside the lever of a tap. In this embodiment there is an electrical connection between the position switch and the signal receiver attached to the PCB or electronic circuit.
Fig. 3a is an enlarged detailed view of the arrangement of the position switch inside the lever.

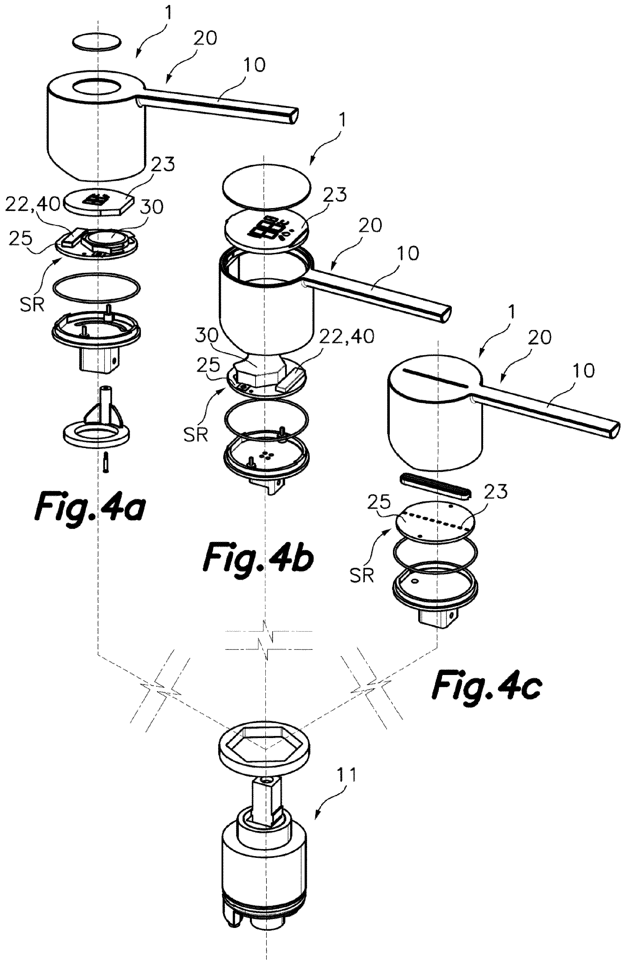

Fig. 4a, 4b and 4c illustrates different possible embodiments according to the tap fitting features of the invention in order to provide visual information in more or less detail on a display included in the tap fitting. From the left to the right: Left figure 4a shows a tap fitting with a standard display providing at least water temperature information and a complete circuitry to provide additional information about the status of the tap (open or closed lever situation) to a BMS, SCADA system or equivalent system. The middle figure 4b shows a tap fitting with a bigger display and more complementary information than the previous figure. The right figure 4c shows a simpler display with only visual information of the status and temperature in a minimalist way, not with values as done in the other type of displays, but enough to inform the user that the water is hot, warm or cold as well as open or closed.
Figs. 4a, 4b and 4c are only some of the several possible embodiments of the tap fitting of this invention that will be able to adopt multiple forms and in particular to be adapted to a pre-existing configuration in a faucet already installed, so that it is possible to equip a faucet already installed with the new functionalities, mainly a control on the state of opening of the faucet, only interchanging an accessory part, which is the lever of action.

### Detailed description of an embodiment

The foregoing and other advantages and features will be more fully understood from the following detailed description of an embodiment with reference to the accompanying drawings, to be taken in an illustrative and not limitative, in which:

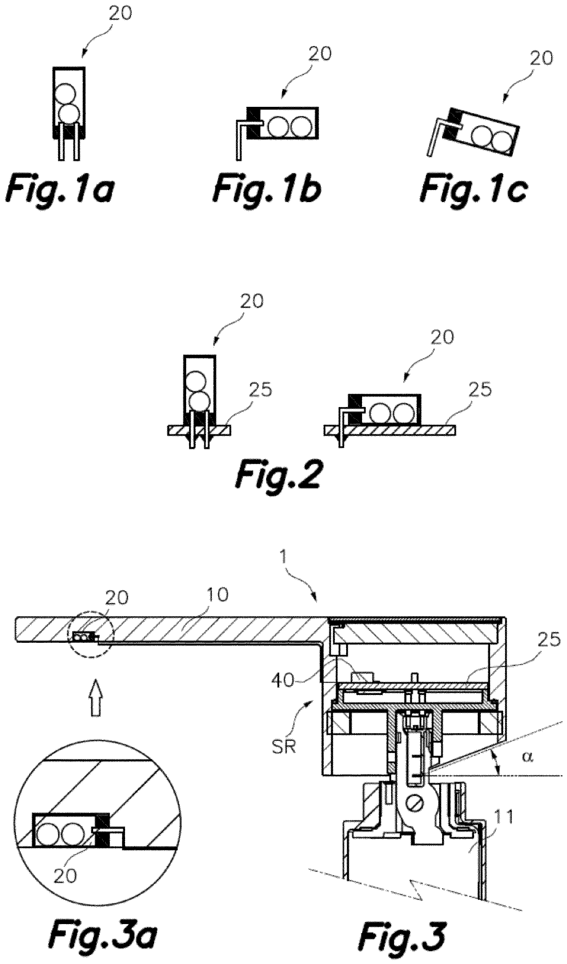

Figures 3 and 4a to 4c shows several possible embodiments of the invention.

The tap fitting 1 comprises an actuating lever 10 for regulating a flow of water that is poured through a tap supply nozzle (not illustrated) and has attached at least one position switch 20, that is a TILT switch (see Fig. 1) integrated in the body of the lever 10. The position switch is electrically feeded by a battery cell. This position switch 20 provides information to a signal receiver, SR included in the same tap or in a near region, or in another alternative implementation conveying the signal to a BMS system, or to a SCADA system, in all the cases informing about an angle of the lever α with regard to a rest position of the lever 10 in which the tap is in a closed state.

The information provided by the position switch 20 is sent to the signal receiver, SR, by wire that in a possible embodiment (as depictured in the example of Fig. 1) could be a circuit track connecting the position switch to a communication module 40 of the PCB 25.

Depending on the installation position of the tap, the position of the TILT sensor or position sensor will be an established one:
- if the lever of the tap is placed on a horizontal plane, with regard to a tap installation plane the TILT sensor will be on a horizontal plane,
- if the lever of the tap is placed on a vertical plane, the sensor will also be placed on a horizontal plane,

For an optimum geometrical operation, the TILT sensor must be installed just in the vertical of the pivot axis of the lever but it can be installed over the entire length of the lever or over the entire width of the lever with respect to a central point containing the pivot axis.

The tap fitting of this invention also can offer temperature information of the water provided by a temperature probe included in the tap body 11 or in a cartridge attached to the tap body 11 that is connected to an electronic circuit or an IC 22 of the PCB 25 providing this information to the SR, BMS or SCADA system.

In the proposed embodiment, the tap fitting includes a LCD display 23 as a user interface with the user to provide temperature and status information of the tap fitting.

For a correct adjustment of the TILT sensor of the tap fitting 1 with regard to the tap body 11, it is envisaged an adjustable system allowing an angular regulation of a support of the TILT sensor. This adjustable system in a possible embodiment can include a screw accessible with a manual tool to adjust it.

The implementation of the tap fitting of this invention by allowing a very precise control of the opening even eventual situation of the taps allows a significant economic saving and a very effective supervision of a faucet installation.

It will be understood that various parts of one embodiment of the invention can be freely combined with parts described in other embodiments, even being said combination not explicitly described, provided there is no harm in such combination.

The scope of the present invention is defined in the following set of claims.

## Claims

1. Tap fitting (1) comprising an actuating lever (10) for regulating a flow of water that is poured through a tap supply nozzle
**characterized in that** the lever (10) or the tap fitting (1) has attached at least one position switch (20) that is electrically feeded and provides a signal to a signal receiver, SR, wherein the at least one position switch (20) provides information about an angle of the lever (α) with regard to a rest position of the lever in which the tap is in a closed state.

2. Tap fitting (1) as per any of the previous claims wherein the at least one position switch (20) is a TILT switch or a hall device or a reed device or a gyroscope device.

3. Tap fitting (1) as per any of the previous claims wherein the signal receiver, SR, includes a display (23) included in the tap fitting (1) or attached to a support close to the tap fitting (1).

4. Tap fitting (1) as per claim 1 or 2, wherein the signal receiver, SR, is in a remote position with regard to a PCB (25) included in the tap fitting (1), and the PCB (25) has a communication module (40) interacting with the SR and/or with a BMS system or with a SCADA system.

5. Tap fitting (1) as per claim 4, wherein the communication module (40) is connected with the SR or with a BMS system or with a SCADA system through a cable or a wired Ethernet communication or a power over Ethernet communication or a wireless communication.

6. Tap fitting (1) as per any of the previous claims wherein energy for said electrically feeding of the position switch (20) and the signal receiver (SR) is provided by a battery (30) or with an electrical grid or a photovoltaic or solar power cell or wind power or a fuel cell or a thermoelectric generator or a combination thereof.

7. Tap fitting 1 as per claim 4 wherein energy for said electrically feeding of the PCB (25) is provided by a battery (30) or with an electrical grid or a photovoltaic or solar power cell or wind power or a fuel cell or a thermoelectric generator or a combination thereof

8. Tap fitting (1) as per claim 1, wherein energy for said electrically feeding of the position switch (20) is provided by the flow of the water or at least in part by the movement of the lever (10).

9. Tap fitting (1) as per claim 4, wherein the PCB (25) further includes an electronic circuit or an IC (22) that provides information about temperature of the water.

10. Tap fitting (1) as per claim 3 wherein the display (23) comprises an element providing a visual information, selected among a LCD display or a LED display.

11. Tap fitting (1) as per claim 10, wherein said LCD display or LED display includes at least one luminous element or an array of luminous elements.

12. Tap fitting (1) as per any of the previous claims wherein a actuator mechanism is included in the tap fitting (1) enabling a closure or open action of the tap on dependence of the signal provided by the position switch (20) from the BMS system or the SCADA system or the SR.

13. Tap fitting (1) as per claim 12, wherein said closure or open action is obtained by means of at least one electro valve included in the tap or in the tap fitting (1) and controlled by the BMS system or the SCADA system or the SR.

14. Tap fitting (1) as per claim 1, wherein the tap fitting (1) is attached to the tap body (11) including an adjustable system allowing an angular regulation of a support of the position sensor of the tap fitting (1) with regard to the tap body (11).

15. Tap fitting (1) as per claim 9, wherein said information about temperature of the water is provided by a temperature probe included in the tap body (11) or in a cartridge attached to the tap body (11).
